(19) Europäisches Patentamt
European Patent Office
Office européen des brevets

(11) Veröffentlichungsnummer: **0 073 414**
**B1**

(12) # EUROPÄISCHE PATENTSCHRIFT

(45) Veröffentlichungstag der Patentschrift: **08.01.86**

(51) Int. Cl.⁴: **C 09 B 29/085** // D06P1/18

(21) Anmeldenummer: **82107522.3**

(22) Anmeldetag: **18.08.82**

(54) **Neue marineblaue Dispersionsfarbstoffe, Verfahren zu deren Herstellung und deren Verwendung zum Färben oder Bedrucken von synthetischen Fasermaterialien.**

(30) Priorität: **22.08.81 DE 3133355**

(43) Veröffentlichungstag der Anmeldung: **09.03.83 Patentblatt 83/10**

(45) Bekanntmachung des Hinweises auf die Patenterteilung: **08.01.86 Patentblatt 86/2**

(84) Benannte Vertragsstaaten: **CH DE FR GB IT LI**

(56) Entgegenhaltungen:
**EP - A - 0 066 235**
**BE - A - 634 032**
**FR - A - 2 432 537**
**GB - A - 2 006 249**
**JP - A - 82 042 982**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Sommer, Karl, Dr., Thewaltstrasse 6, D-6240 Königstein/Taunus (DE)**
Erfinder: **Schickfluss, Rudolf, Dr., Luisenstrasse 37, D-6233 Kelkheim (Taunus) (DE)**

**EP 0 073 414 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung sind neue marineblaue Dispersionsfarbstoffe der allgemeinen Formel (1)

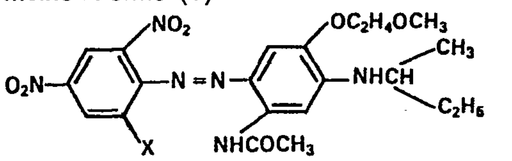
(1)

worin X ein Wasserstoff- oder Chloratom bedeutet, Verfahren zu deren Herstellung und deren Verwendung zum Färben oder Bedrucken von synthetischen Fasermaterialien.

Die Farbstoffe der vorstehend genannten allgemeinen Formel (1) unterscheiden sich von denen der deutschen Patentschrift 28 33 854 in der Kupplungskomponente nur dadurch, dass sie die Acetylaminogruppe anstelle der Propionylaminogruppe enthalten, wobei die Kombination Acetylaminogruppe und Isobutylaminogruppe in der Formel (1) wichtig ist. Es muss als überraschend erachtet werden, dass die erfindungsgemässen Farbstoffe sich gegenüber den Farbstoffen der genannten deutschen Patentschrift besonders durch ein stark verbessertes Ziehvermögen auszeichnen.

Obwohl der unter die allgemeine Formel (1) fallende Farbstoff, wobei X ein Chloratom bedeutet, dasselbe Molekulargewicht wie der Farbstoff Nr. 4 (siehe die nachstehende Formel)

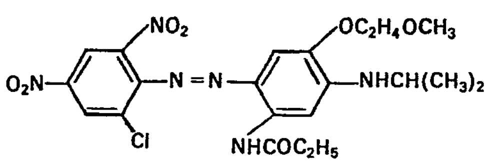

der Tabelle der oben genannten deutschen Patentschrift hat, ist er dem bekannten Farbstoff durch das verbesserte Ziehvermögen und durch die sich daraus ergebende höhere Farbausbeute deutlich überlegen.

Die erfindungsgemässen Farbstoffe eignen sich zum Färben und Bedrucken von synthetischen Fasermaterialien, wie solchen aus Cellulose-2 1/2-acetat, Cellulosetriacetat, Polyamid und insbesondere Polyester. Darüber hinaus geben sie keine Ablagerungen beim Färben von Wickelkörpern. Die Färbungen und Drucke auf Polyesterfasermaterialien besitzen besonders gute Licht- und Abgasechtheiten, sind wenig reduktionsempfindlich und eignen sich zum Anfärben des Polyesteranteils in Polyester-Wolle-Mischgeweben.

Die Herstellung der erfindungsgemässen Farbstoffe erfolgt nach bekannten Verfahren durch Diazotieren der Diazokomponenten der allgemeinen Formel (2)

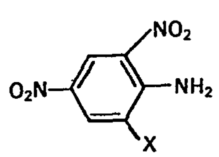
(2)

worin X ein Wasserstoff- oder Chloratom sein kann, und Kuppeln der erhaltenen Diazoniumverbindungen mit der Kupplungskomponente 2-Isobutylamino-4-acetamino -1- β-methoxyäthoxybenzol der Formel (3)

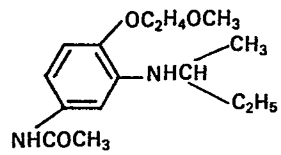
(3)

Das Diazotieren kann beispielsweise in Schwefelsäure mit Nitrosylschwefelsäure, und das Kuppeln durch Einlaufenlassen der Diazolösung in die wässrig-schwefelsaure Lösung der Kupplungskomponente erfolgen.

Die Herstellung von Farbpräparationen aus den erfindungsgemässen Farbstoffen erfolgt durch Nassmahlung mit Dispergiermitteln.

Gegenüber dem unter die allgemeine Formel des Anspruchs 1 der belgischen Patentschrift BE-A- 634 032 fallenden Farbstoff der Formel

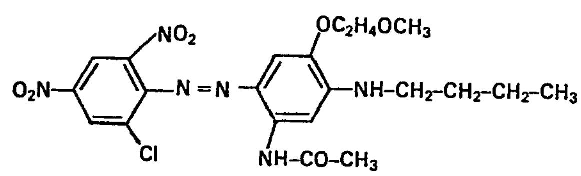

zeichnen sich die erfindungsgemässen Farbstoffe jeweils nächstvergleichbarer Struktur (enthaltend einen Isobutylrest anstelle des n-Butylrestes) durch ein besseres Ziehvermögen beim Färben von Polyamidfasermaterialien aus.

Beispiel 1

183 Gewichtsteile 2,4-Dinitro-anilin werden in 824 Gewichtsteilen 96%iger Schwefelsäure bei 20–25 °C eingetragen und unter Rühren gelöst. Anschliessend tropft man 324 Gewichtsteile Nitrosylschwefelsäure 40%ig bei 5–10 °C ein und lässt drei Stunden bei dieser Temperatur rühren.

Die so erhaltene Diazolösung lässt man in eine Lösung von 280 Gewichtsteilen 2-Isobutylamino-4-acetamino -1- β-methoxyäthoxy-benzol in 1000 Gewichtsteilen Wasser, 2500 Gewichtsteilen Eis und 100 Gewichtsteilen Schwefelsäure 96%ig einlaufen. Dabei wird die Temperatur durch Zugabe von Eis auf 0–5 °C gehalten. Man rührt 30 Minuten nach, heizt auf 50–55 °C, filtriert und wäscht mit Wasser säurefrei. Nach dem Trocknen erhält man 403 Gewichtsteile des Farbstoffs der Formel

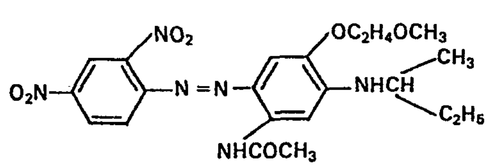

der, in eine Präparation überführt, auf Polyesterfasermaterialien rotstichig marineblaue Färbungen mit gutem Echtheitsniveau ergibt.

Beispiel 2

217,5 Gewichtsteile 6-Chlor-2,4-dinitro-anilin werden in 564 Gewichtsteile Schwefelsäure 96%ig gelöst und mit 329 Gewichtsteilen Nitrosylschwefelsäure 40%ig bei 35–40 °C diazotiert.

Die Diazolösung lässt man, wie in Beispiel 1 beschrieben, in die vorgelegte Lösung der Kupplungskomponente 2-Isobutylamino-4-acetamino -1- β-methoxyäthoxy-benzol einlaufen und verfährt im übrigen wie in Beispiel 1 beschrieben.

Man erhält 432 Gewichtsteile des Farbstoffs der Formel

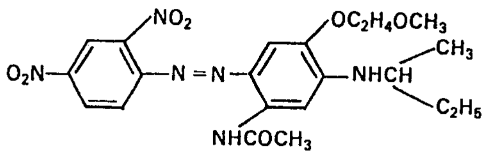

welcher in eine Präparation überführt, auf Polyesterfasermaterialien marineblaue Färbungen mit guten Gebrauchsechtheiten ergibt.

**Patentansprüche**

1. Dispersionsfarbstoffe der allgemeinen Formel (1)

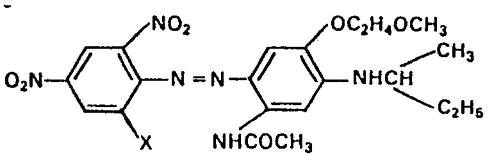
(1)

in welcher X ein Wasserstoff- oder Chloratom bedeutet.

2. Dispersionsfarbstoff der Formel

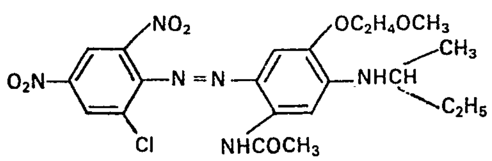

3. Verfahren zur Herstellung von Monoazofarbstoffen der in Anspruch 1 genannten allgemeinen Formel (1), dadurch gekennzeichnet, dass man nach bekannten Verfahren die Diazokomponenten der allgemeinen Formel (2)

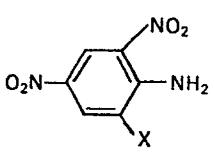
(2)

in welcher X ein Wasserstoff- oder Chloratom bedeutet, diazotiert und die erhaltenen Diazoniumverbindungen mit der Kupplungskomponente 2-Isobutylamino-4-acetamino -1- β-methoxyäthoxy-benzol der Formel (3)

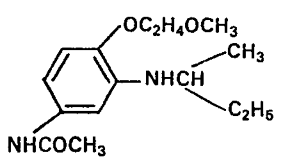
(3)

kuppelt.

4. Verwendung der Dispersionsfarbstoffe der in Anspruch 1 genannten allgemeinen Formel (1) zum Färben oder Bedrucken von synthetischen Fasermaterialien.

**Revendications**

1. Colorants de dispersion répondant à la formule générale (1):

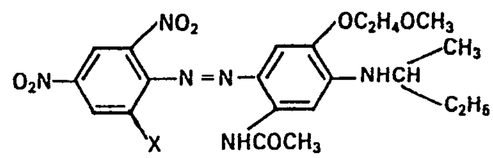
(1)

dans laquelle X représente un atome d'hydrogène ou de chlore.

2. Colorant de dispersion qui répond à la formule:

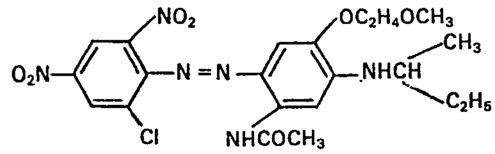

3. Procédé de préparation de colorants monoazoïques de formule générale (1) selon la revendication 1, procédé caractérisé en ce que, en opérant de manière connue, on diazote une composante de diazotation répondant à la formule générale (2):

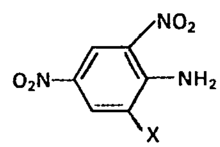
(2)

dans laquelle X représente un atome d'hydrogène ou de chlore, et on copule le composé diazoïque obtenu avec un copulant qui est le (méthoxy-2 éthoxy)-1 isobutylamino-2 acétylamino-4 benzène de formule (3):

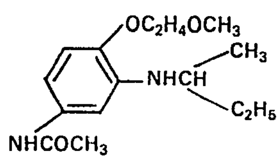
(3)

4. Application des colorants de dispersion de formule générale (1) selon la revendication 1 pour la teinture ou l'impression de matières fibreuses synthétiques.

**Claims**

1. Disperse dyestuffs of the general formula (1)

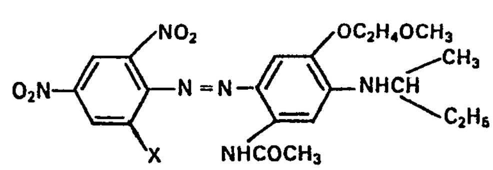
(1)

wherein X is a hydrogen or chlorine atom.

2. Disperse dyestuff of the formula

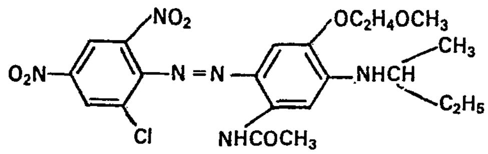

3. A process for the manufacture of monoazo dyestuffs of the general formula (1) as claimed in claim 1, which comprises diazotizing according to known methods the diazo components of the general formula (2)

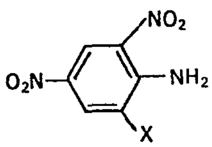 (2)

wherein X is a hydrogen or chlorine atom, and coupling the resultant diazonium compounds with the coupling component 2-isobutylamino -4- acetamino -1- β-methoxyethoxybenzene of the formula (3)

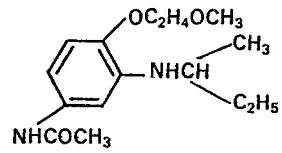 (3)

4. Use of the disperse dyestuffs of the general formula (1) as claimed in claim 1 for coloring or printing synthetic fiber materials.